# FASCICULE DE BREVET EUROPEEN

(11) **EP 3 129 204 B1**
(45) Date de publication et mention de la délivrance du brevet: **27.09.2017**
(21) Numéro de dépôt: 15718821.0
(22) Date de dépôt: 13.04.2015
(51) Int. Cl.: B29C 33/06, B29C 33/30, B29C 70/44, B29C 35/08

(54) **DISPOSITIF POUR LE CHAUFFAGE D'UN MOULE**
VORRICHTUNG ZUM ERWÄRMEN EINER GUSSFORM
DEVICE FOR HEATING A MOLD

(30) Priorité: 11.04.2014 FR 1453285
(43) Date de publication de la demande: 15.02.2017
(73) Titulaire: ROCTOOL, 73370 Le Bourget du Lac (FR)
(72) Inventeur: FEIGENBLUM, José, F-73170 Saint Paul (FR); FRITSCH, Julien, F-73000 Chambéry (FR)
(74) Mandataire: Ipside
(86) Numéro de dépôt international: PCT/EP2015/057993
(87) Numéro de publication internationale: WO 2015/155369

(56) Documents cités:
- EP-A1- 2 508 329
- WO-A1-98/00274
- FR-A1- 2 816 237
- US-A- 6 091 063

## Description

L'invention concerne un dispositif pour le chauffage d'un moule. L'invention est plus particulièrement, mais non exclusivement, adaptée à la réalisation d'un moule de grande dimension destiné à la mise en oeuvre de matériaux composites selon un procédé dit hors autoclave. La mise en oeuvre d'un matériau composite à matrice thermoplastique ou thermodurcissable à partir de plis pré-imprégnés, nécessite une opération de cuisson/consolidation de la préforme constituée par la stratification desdits plis. Cette opération de cuisson/consolidation est généralement réalisée dans un autoclave, c'est-à-dire dans une enceinte entièrement fermée de grande dimension pourvue d'un système de chauffage et d'un système de mise en pression, la stratification étant ensachée et tirée au vide. Un tel autoclave permet, notamment, d'obtenir une mise en température uniforme de la stratification au cours de l'opération de cuisson/consolidation. Un autoclave constitue un moyen de production d'un coût élevé et, particulièrement lorsqu'il est adapté à la fabrication de pièces de grandes dimensions, constitue un moyen unique au sein d'un système de production, dont la disponibilité dicte la gestion de production. Le prix d'un autoclave est exponentiellement proportionnel à son diamètre et au coût de la porte d'accès à l'intérieur de l'autoclave, porte qui doit être étanche alors qu'elle est soumise à la pression et à un différentiel de température important entre sa face interne et sa face externe. Aussi, plus l'autoclave est apte à la mise en oeuvre de pièces de grande dimension à haute température et plus son coût est élevé. Afin d'échapper aux contraintes imposées par la disponibilité et par le coût d'un tel équipement, notamment pour la mise en oeuvre de matériaux composites à matrice organique, des procédés, dits hors autoclave, sont utilisés notamment pour la cuisson ou la consolidation de pièces constituées de ces matériaux. Ces procédés hors autoclave utilisent des moules à chauffage autonomes ou aptes à être placés dans une étuve et des moyens pour augmenter la pression à l'intérieur du moule.

Typiquement les procédés hors autoclave pour la mise en oeuvre d'un matériau composite à renfort fibreux dans une résine thermodurcissable sont des procédés mettant en oeuvre une injection de résine, par transfert ou par infusion, la cavité du moule étant préalablement, ou non, tirée au vide. Les procédés les plus classiques utilisent initialement un drapage de plis de fibres sèches, insérés dans la cavité fermée d'un moule, de la résine liquide étant injectée sous pression dans ladite cavité. Le moule utilisé pour ces procédés est un moule fermé rigide, définissant une cavité entre deux pièces, lequel moule est dimensionné pour résister à la pression à l'intérieur de ladite cavité et à l'effort de fermeture correspondant. La préforme de fibres sèches se trouve dans la cavité entre les faces moulantes des deux pièces rigides. C'est le cas par exemple du procédé RTM pour « Resin Transfer Molding ».

Parmi ces procédés hors autoclave, les procédés assistés par le vide tels que le procédé dit « LRIVAP » pour « *Liquid Resin Injection Vacuum Assisted Process* » ou le procédé dit « VARTM » pour « *Vacuum Assisted Resin Transfer Molding* » utilisent un outillage dit souple, dans lequel une stratification de fibres sèches est drapée sur une face moulante dudit outillage. Ladite stratification est ensachée et tirée au vide, avant l'injection de résine.

Lorsque ces procédés hors autoclave sont mis en oeuvre selon l'art antérieur sur des pièces de grande dimension telles que, selon des exemples non limitatifs, une pièce de voilure ou de fuselage d'un aéronef ou une pale d'éolienne, l'obtention d'un chauffage uniforme de la cavité du moule ou de la matrice dans laquelle se trouve la stratification est délicate. Dans le cas d'un moule à deux faces définissant une cavité fermée, la masse du moule est importante et nécessite beaucoup d'énergie. L'utilisation d'un moule à une seule face moulante, permet de réduire la masse du dispositif de moulage, mais dans certaines proportions seulement car la réduction de l'inertie thermique devient un handicap pour l'obtention d'une température uniforme. De plus, il est difficile d'introduire dans un moule léger un dispositif de chauffage par circulation de fluide ou par résistance électrique sans augmenter les sections du moule. La non-uniformité de la température, en plus de son influence sur l'écoulement de la résine est également susceptible de produire des distorsions de forme du moule. Aussi, ces procédés, plus particulièrement lorsqu'ils sont utilisés pour des pièces de grande dimension, ne sont pas adaptés à une mise en oeuvre par un moule autonome, et sont couramment mis en oeuvre en étuve. De telles étuves, bien que représentant un investissement moins élevé que celui d'un autoclave, posent cependant le problème de leur disponibilité et nécessitent le chauffage d'un volume entièrement clos nettement plus important que celui constitué par la cavité du moule ou la stratification.

Le document EP1 894 442 décrit un procédé de chauffage d'une surface moulante utilisant des inducteurs insérés dans des cavités, rainures ou alésages, usinées dans un moule. L'épaisseur de matière située entre lesdites cavités et la surface moulante est utilisée pour uniformiser la température de la surface moulante lors du chauffage provoqué par la mise en circulation d'un courant alternatif dans lesdits inducteurs. Ainsi, ce type d'outillage, qui donne satisfaction sur des pièces de dimension moyenne, telles que des capots de véhicule automobile, nécessite une carcasse relativement massive, et s'avère coûteux pour les pièces de très grande dimension telles que celles visées par l'invention.

Le document EP 1 728 411 / US 7 679 036 décrit un dispositif et un procédé pour la transformation d'un matériau compris dans une cavité, notamment une cavité étanche, comprenant deux demi-moules électriquement conducteurs en vis-à-vis, les faces en vis-à-vis des deux demi-moules, délimitant la cavité, étant isolées électriquement l'une de l'autre, et étant constitués d'un matériau magnétique. Les deux demi-moules sont entourés par les spires d'un circuit d'induction. L'entrefer créé entre les deux demi-moules permet de faire circuler les courants induits sur les faces de la cavité et ainsi d'obtenir un chauffage concentré sur ces faces sans intégrer de moyens de chauffage dans les demi-moules, telle qu'une résistance électrique, un circuit de circulation d'un fluide, vapeur ou huile, ou encore, des inducteurs. Selon cet exemple de l'art antérieur, le circuit d'induction est configuré en deux parties séparables, liées à chacun des demi-moules et connectées mécaniquement et électriquement lors du rapprochement desdits demi-moules afin de fermer la cavité. Ainsi, ce dispositif de l'art antérieur est plus particulièrement destiné à être utilisé en combinaison avec un moyen d'ouverture - fermeture du moule tel une presse.

Le document US 6 091 063 décrit un moule, destiné à être installé sur une presse, comprenant un corps de moule en deux parties opposées constituées d'un matériau céramique et comportent chacune un insert métallique, lesdits inserts délimitant une cavité moulante. Un circuit d'induction formant une bobine entourant lesdits inserts lorsque le moule est formé est intégré dans les corps de moule en céramique.

Le document EP 2 508 329 décrit un dispositif pour la consolidation composite, lequel dispositif comporte une matrice constituée d'un matériau composite renforcé par des fibres de verre dans laquelle sont inséré des inducteurs, et qui comporte sur sa face moulante une suscepteur magnétique.

Le document FR 2 816 237 décrit un moule, destiné à être installé sur une presse, pour la transformation d'une matière plastique, lequel moule comprend un corps de moule comportant deux parties opposées constituées d'un matériau électriquement isolant, l'une des parties comprenant une surface moulante consituée d'un matériau magnétique, et des conduits pour recevoir des moyens de chauffage électrodynamiques ou magnétodynamique,s et l'autre partie comprenant une vessie gonflable.

L'invention vise à résoudre les inconvénients de l'art antérieur et concerne à cette fin un dispositif pour le chauffage d'une face moulante, notamment de grande dimension, lequel dispositif comporte les caractéristiques de la revendication 1. Ainsi, l'utilisation de moyens de chauffage par induction permet d'obtenir un chauffage uniforme, rapide et contrôlé d'une feuille métallique de faible épaisseur constituant la face moulante selon un procédé dit « hors autoclave »

L'invention est avantageusement mise en oeuvre selon les modes de réalisation exposés ci-après lesquels sont à considérer individuellement ou selon toute combinaison techniquement opérante.

Avantageusement, le socle est constitué d'un matériau non métallique tel que du béton ou une céramique. Ainsi, un socle rigide est obtenu de manière économique, la masse dudit socle n'étant pas soumise au chauffage.

Avantageusement, la feuille métallique comprend une couche ferromagnétique constituée d'un alliage comprenant du Fer et du Nickel de type INVAR. Ainsi, le dispositif objet de l'invention est particulièrement adapté à la mise en oeuvre de matériaux composites à matrice organique, mis en oeuvre à une température proche de la température de Curie de l'INVAR et dont le coefficient de dilatation thermique est faible comme les composites à matrice époxyde et à renfort sous forme de fibres de carbone continues.

Avantageusement, la feuille métallique comprend une couche ferromagnétique constituée de Nickel (Ni). Ainsi, le dispositif est adapté pour des matériaux demandant une température de mise en oeuvre plus élevée, notamment les composites à matrice thermoplastique à haute performance. De plus ce matériau est facilement mis en oeuvre par des techniques d'usinage additif.

Selon un exemple de réalisation, le dispositif objet de l'invention comporte :
d des moyens d'ensachage délimitant, avec la face moulante, une cavité étanche apte à contenir une préforme fibreuse ;
e. des moyens pour tirer au vide le volume compris entre la face moulant et les moyens d'ensachage.

Ainsi, selon ce mode de réalisation le dispositif objet de l'invention est adapté à la mise en oeuvre d'un procédé hors autoclave à une face moulante. Plus particulièrement, le dispositif objet de l'invention est adapté à la consolidation en forme d'une pièce composite stratifiée à matrice thermoplastique ainsi qu'à la mise en oeuvre des procédés destinés aux composites à matrice thermodurcissable tel que le procédé LRIVAP ou le procédé VARTM.

À cette fin, le dispositif selon cet exemple de réalisation de l'invention comporte avantageusement :
f. des moyens pour injecter de la résine dans la cavité délimitée par la face moulante

Avantageusement, le dispositif objet de l'invention comporte :
g. un circuit de circulation d'un fluide de refroidissement en contact avec la feuille métallique.

Ainsi, le refroidissement forcé et rapide de la feuille moulante, associé aux capacités de chauffage rapide des moyens d'induction permet de réduire les temps de cycle.

Selon un mode de réalisation particulier, adapté notamment à la cuisson/consolidation de pièces épaisses, les moyens d'ensachage comprennent une vessie comportant des moyens de chauffage. Ainsi le chauffage réalisé sur l'autre face de la pièce permet de réduire les gradients de température dans l'épaisseur de la pièce au cours du cycle de cuisson/consolidation.

Selon un premier mode de réalisation du dispositif objet de l'invention, la face moulante de la feuille métallique est ferromagnétique et ledit dispositif comprend :
h. une enceinte dont le volume est délimité par les spires d'un circuit d'induction ;
i. des moyens pour charger, décharger et maintenir la feuille métallique et son support à l'intérieur des spires du circuit d'induction.

Ainsi, l'enceinte du dispositif objet de l'invention n'est pas nécessairement close et n'a pas besoin d'être isolée thermiquement. La circulation du courant dans les spires du circuit d'induction provoque le chauffage direct de la face moulante de la feuille métallique, par circulation des courants induits sur cette face, sans transfert de chaleur par conduction/convection entre l'air de l'enceinte et le moule. Le volume chauffé et extrêmement réduit et l'uniformité du chauffage est obtenue par le contrôle de la circulation des courants induits dans celui-ci.

Selon une variante particulière de ce premier mode de réalisation, l'ensachage est constitué d'un matériau électriquement isolant et ledit dispositif comprend :
j. une cale électriquement isolante sur le pourtour de la feuille métallique ;
k. une contre-pièce constituée d'un matériau électriquement conducteur et apte à pressurer une préforme dans la cavité comprise entre l'ensachage et la surface moulante, lors du tirage au vide de ladite cavité et comprenant une surface en vis-à-vis de la face moulante de sorte à créer un entrefer entre ladite face moulante et la face en vis-à-vis de la contre-pièce.

Ainsi, la contre-pièce crée un entrefer et améliore encore l'efficacité et le contrôle du chauffage de la surface moulante, notamment par la maîtrise de l'épaisseur de l'entrefer. Cette variante de réalisation permet d'utiliser la contre-pièce comme tôle de conformation ou « *caul plate »* et les cales isolantes comme cales de tablage pour la maîtrise des épaisseurs, et ainsi de réduire le nombre de pièces utilisées dans le moule

Avantageusement le dispositif objet de l'invention comporte selon son premier mode de réalisation :
I. des parois constituées d'un matériau électriquement conducteur, s'étendant entre une surface du socle et la feuille métallique et réalisant un circuit électrique fermé comprenant ladite feuille métallique.

Ainsi, le dispositif est particulièrement léger et l'utilisation de parois électriquement conductrices permet de canaliser les courants induits dans lesdites parois vers la surface moulante.

Avantageusement, les parois sont constituées d'un matériau électriquement conducteur de faible résistivité électrique et non magnétique, tel qu'un alliage d'aluminium ou de cuivre. Ainsi, les parois n'étant pas magnétiques, leur échauffement sous l'effet de la circulation des courants induits et faible, et elles permettent de concentrer l'énergie pour le chauffage de la surface moulante.

Selon un exemple de réalisation, la feuille métallique est constituée d'un matériau électriquement conducteur, non magnétique, et la surface moulante comprend un revêtement ferromagnétique. Ainsi, ladite feuille est constituée d'un matériau choisi pour ses propriétés de formabilité ou d'usinabilité, indépendamment de ses propriétés magnétiques.

Selon un mode de réalisation avantageux du premier mode de réalisation, le dispositif objet de l'invention comporte une paroi comportant une extension dans le plan de formage, dont le contour est configuré de sorte que la résistance électrique de la feuille métallique mesurée selon l'arc sur ladite feuille métallique entre une extrémité de ladite extension et l'autre paroi, selon une direction parallèle à la projection sur ladite feuille la partie des spires s'étendant parallèlement au plan de formage et face à la face moulante, est constante sur toute la surface de ladite face moulante. Ainsi, la longueur du trajet des courants induits permettant de chauffer la face moulante, et par suite la résistance électrique opposée à la circulation de ces courants, est contrôlée de sorte à maîtriser la quantité d'énergie injectée dans la face moulante et l'uniformité de la température. Alternativement la forme du contour de l'extension de la paroi dans le plan de formage est choisie pour contrôler la longueur du trajet selon un autre critère que la constance de cette longueur ou de cette résistance électrique.

Selon une variante de réalisation du dispositif objet de l'invention, la partie des spires du circuit d'induction parallèle au plan de formage est amovible et que les autres parties des spires sont fixées aux parois et au socle. Cette variante de réalisation où les inducteurs sont liés au moule permet de constituer un moule autonome.

Selon un mode de réalisation de cette variante du dispositif objet de l'invention, la partie amovible des spires du circuit d'induction est connectée aux autres parties desdites spires par des moyens adaptés pour ajuster la distance entre ladite partie amovible et la face moulante. Ainsi, cet ajustement permet de contrôler également le chauffage de la face moulante.

Avantageusement, le dispositif objet de l'invention comprend selon cette dernière variante des moyens d'assemblage entre la feuille comportant la face moulante et les parois de sorte à permettre le remplacement de ladite feuille par une autre feuille. Ainsi, l'outillage autonome selon l'invention comporte une partie fixe correspondant au chauffage et les formes s'adaptent sur cet outillage sans qu'il ne soit nécessaire d'adapter les moyens de chauffage à cesdites formes.

Selon l'invention, la feuille métallique comporte des conduits aptes à recevoir un moyen de chauffage électrique ou à canaliser la circulation d'un fluide caloporteur. Ce mode de réalisation permet de chauffer et de refroidir la feuille métallique comportant la surface moulante. Selon le mode de réalisation les moyens de chauffage électrique intégrés dans les conduits sont des moyens de chauffage par induction ou d'autres moyens. Lesdits moyens de chauffage interviennent seul ou en complément du chauffage par induction au cours du cycle de transformation de la matière.

Selon une variante, le moyen de chauffage électrique est un inducteur et la feuille métallique comprend une âme constituée d'un matériau magnétique. Ainsi la circulation d'un courant alternatif dans l'inducteur provoque le chauffage de l'âme.

Avantageusement, l'âme magnétique de la feuille métallique, comprend sur sa face opposée à la face moulante, un placage constitué d'un matériau dont les propriétés magnétiques sont différentes de celles de ladite âme ferromagnétique, les conduits s'étendant selon des directions essentiellement parallèles à la face moulante entre ladite couche magnétique et le placage. Le placage permet en fonction de sa nature et de ses propriétés magnétiques, de l'épaisseur de l'âme et de la forme du contact entre le placage et ladite âme de moduler la quantité d'énergie produisant du chauffage, injectée par les inducteurs. Il permet également de faciliter la réalisation d'un moule métallique de faible épaisseur et de grandes dimensions comprenant des conduits.

Avantageusement, le dispositif comprend :
m. des moyens pour faire circuler un fluide caloporteur dans des conduits entre la couche magnétique et le placage.

Ainsi, ces moyens de refroidissement qui permettent de réduire les temps de cycle utilisent des conduits libres ou utilisés également par les inducteurs.

Selon un exemple de réalisation, le placage est constitué d'un matériau électriquement conducteur amagnétique. Avantageusement ce matériau est constitué de cuivre ou d'aluminium. L'utilisation d'un tel matériau permet de réduire la résistance électrique du circuit inductif soumis aux courants induits générés par les inducteurs, mais en contrepartie réduit la part d'énergie engendrant du chauffage dans l'énergie totale injectée. Cette variante de réalisation est ainsi plus particulièrement, mais non exclusivement, adaptée à la réalisation d'une pièce de très grande dimension dont le polymère constituant la matrice est à bas point de cuisson ou de fusion.

Selon un autre exemple de réalisation, le placage est constitué d'un matériau ferrimagnétique ou ferromagnétique. Avantageusement ce placage est constitué d'un matériau comprenant un ferrite, et ledit placage comprend des reliefs proéminents s'étendant dans la feuille moulante à l'emplacement des conduits comprenant un inducteur. Ces caractéristiques améliore le rendement et permettent, à puissance électrique égale, de concentrer l'énergie convertie en chauffage dans la couche magnétique. Ainsi cette variante de réalisation est plus particulièrement adaptée dans le cas de la mise en oeuvre d'un matériau dont la température de fusion ou de cuisson est élevée, notamment dans le cas de la mise en oeuvre d'un composite dont la matrice est constituée d'un polymère thermoplastique à haute performance.

Avantageusement, la feuille métallique comporte un revêtement thermiquement conducteur, lequel revêtement constitue la face moulante. Ce revêtement permet d'obtenir rapidement une uniformisation de la température sur la face moulante.

Selon une autre variante de l'invention l'âme (de la feuille métallique est constituée d'un alliage léger. Cette variante de réalisation permet d'obtenir un moule plus léger et d'en simplifier la conception et la manutention.

Avantageusement, le moyen de chauffage électrique est un inducteur et les conduits véhiculant ledit inducteur sont constitués d'un matériau magnétique, tel un acier. Ainsi, l'inducteur chauffe lesdits conduits et la chaleur est transmise par conduction à la surface moulante ce qui permet d'uniformiser la température sur ladite surface moulante.

Avantageusement, la feuille métallique comprend un revêtement magnétique sur la face moulante. Ainsi ledit revêtement est susceptible d'être chauffé par les inducteurs compris dans les conduits ou par le circuit d'induction extérieur.

Avantageusement la feuille métallique du dispositif comporte sur la face opposée à la face moulante un placage constitué d'un matériau souple apte à fermer une des faces d'un conduit de circulation d'un fluide caloporteur. Ce mode de réalisation facilite la réalisation des conduits et l'obtention de leur étanchéité.

Avantageusement, le conduit adapté à la circulation d'un fluide caloporteur du dispositif objet de l'invention comporte des moyens aptes à favoriser un régime d'écoulement turbulent dudit fluide caloporteur. Ainsi ce régime turbulent favorise les échanges de chaleur par convection avec les parois dudit conduit. Selon un procédé pour la fabrication d'un dispositif selon l'invention, la feuille métallique est obtenue par un procédé de fabrication comprenant une opération d'usinage additif.

Selon un procédé, la feuille métallique est constituée de nickel et elle est obtenue par une technique de dépôt NVD Selon un autre procédé, la feuille métallique est obtenue par un procédé comprenant une étape de moulage d'un alliage léger dans un moule comprenant des tubes d'acier.

L'invention est exposée ci-après selon ses modes de réalisation préférés, nullement limitatifs, et en référence aux figures 1 à 10 dans lesquelles :
- la figure 1 montre selon un vue en perspective et en éclaté un exemple de réalisation de l'outillage du dispositif objet de l'invention ;
- la figure 2 illustre selon une vue en perspective un mode de réalisation du dispositif objet de l'invention dans lequel l'outillage est introduit dans une enceinte ;
- la figure 3 représente selon une vue en bout le dispositif objet de l'invention selon le mode de réalisation de la figure 2, l'ouillage étant placé dans l'enceinte ;
- la figure 4 illustre selon une vue en bout une autre variante du dispositif objet de l'invention dans la quelle le circuit d'induction est lié au parois de l'outillage ;
- la figure 5 montre selon une vue en coupe AA définie figure 2 un exemple de réalisation du dispositif objet de l'invention utilisant une contre-pièce ;
- la figure 6 est une vue partielle en perspective de la feuille et des parois de l'outillage du dispositif objet de l'invention selon un mode de réalisation particulier dudit outillage ;
- la figure 7A représente selon une vue de face en coupe BB définie figure 7B un exemple de réalisation du dispositif objet de l'invention dans lequel des inducteurs sont intégrés dans des conduits réalisés entre la feuille portant la surface moulante et un placage ;
- la figure 7B montre le mode de réalisation du dispositif objet de l'invention représenté figure 7A selon une vue de dessus en coupe CC définie figure 7A, un détail montre un turbulateur dans un conduit de circulation d'un fluide ;
- la figure 8 montre selon une vue en coupe BB définie figure 7B, un exemple de réalisation du dispositif objet de l'invention, dans lequel le placage comporte des reliefs s'étendant dans les conduits recevant un inducteur ;
- la figure 9 représente selon une vue en coupe CC, un mode de réalisation de la feuille métallique du dispositif objet de l'invention, dans lequel ladit feuille est représentée plane pour simplification et montre également une vue de détail d'un canal de refroidissement selon une section 9-9 définie sur cette même vue ;
- et la figure 10, montre selon une vue en coupe CC représentée selon une surface moulante plane pour faciliter a représentation, exemple de préforme fibreuse mise en oeuvre par le dispositif objet de l'invention associé à une vessie chauffante.

Sauf lorsque ces éléments sont indispensables à la compréhension, le dispositif objet de l'invention est représenté sans la préforme fibreuse et sans les moyens d'ensachage, ces éléments étant parfaitement connus de l'art antérieur, afin de simplifier les représentations.

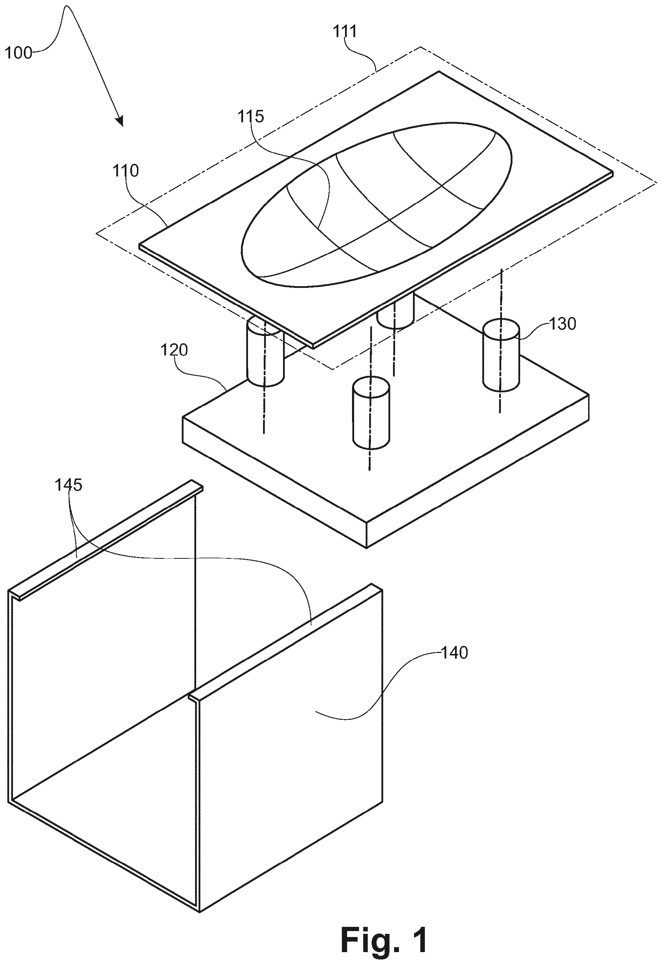

Figure 1, selon un exemple de réalisation, l'outillage du dispositif objet de l'invention comprend une feuille (110) métallique formée comprenant une surface moulante (115). Selon cet exemple de réalisation, la surface (115) moulante est en creux par rapport à un plan (111) virtuel, dit plan de formage, tangent à la surface plan de ladite feuille (110). Cette feuille est, selon un exemple de réalisation, constituée d'un alliage magnétique de fer (Fe) et de nickel (Ni) comprenant, par exemple 36 % de nickel commercialement dénommé INVAR car présentant un faible coefficient de dilatation. La face moulante (115) de ladite feuille (110) métallique est selon un exemple de réalisation, destinée à recevoir une préforme fibreuse constituée de fibres sèches ou de fibres pré-imprégnées d'un polymère thermoplastique.

Les termes « fibres sèches » désignent une stratification de plis fibreux pré-imprégnés avec au plus 5 % de résine thermodurcissable crue. Les termes « fibres pré-imprégnées » s'agissant d'une pré-imprégnation avec un polymère thermoplastique désignent une stratification de plis fibreux calandrés avec un film thermoplastique, poudrés avec un polymère thermoplastique ou co-mêlées avec des mèches thermoplastiques.

Ainsi, l'utilisation d'INVAR pour la constitution de la feuille métallique permet d'adapter le coefficient de dilatation de la face moulante à la dilatation des fibres de carbone. Alternativement, lorsque, par exemple, les plis fibreux de la préforme sont constitués de fibres de verre ou de fibres métalliques, la feuille (110) métallique est constituée d'un acier à bas carbone ou d'un acier comprenant du silicium ferromagnétique. Selon encore un autre mode de réalisation, la feuille (110) est constituée de nickel. Selon sa constitution, la précision de réalisation visée, et la complexité de la face moulante, ladite feuille est formée par un procédé de formage : estampage, étirage, formage incrémental, électroformage, ou encore par un procédé d'usinage par enlèvement de matière, ou par un procédé d'usinage additif tel qu'un procédé de dépôt de nickel en phase vapeur (dit NVD), un procédé de frittage de poudre par laser ou un procédé de projection de poudre en fusion, ou finalement par une combinaison de ces procédés. À titre d'exemple non limitatif le document WO 2013/079725 décrit un exemple de combinaison de tels procédés pour l'obtention d'une pièce.

Selon un autre mode de réalisation, la feuille (110) comportant la surface (115) moulante est constituée d'un matériau métallique électriquement conducteur, par exemple, un alliage de cuivre ou un alliage d'aluminium et la surface moulante fait l'objet d'un revêtement d'une épaisseur de quelques 1/10^{ème} de millimètres à quelques millimètres, d'un matériau magnétique, par exemple du nickel.

Selon cet exemple de réalisation de l'outillage du dispositif objet de l'invention, la feuille (110) métallique comprenant la surface (115) moulante est liée à un socle (120) par des éléments de liaison (130). Ledit socle et les éléments de liaison sont dimensionnés en section, en nombre et en position en ce qui concerne les éléments (130) de support, de sorte à rigidifier la feuille (110) comportant la surface (115) moulante. À titres d'exemples non limitatifs, le socle (120) et les plots (130) de support sont constitués de béton sans armature métallique, de silicates, de zircone ou d'alumine de sorte à obtenir des éléments rigide à faible coefficient de dilatation thermique et à moindre coût.

L'outillage comporte des parois (140) constituées d'un matériau électriquement conducteur de faible résistivité électrique. Lesdites parois (140) s'étendent entre le socle (120) et la feuille (110) comportant la surface moulante, avec laquelle elles sont en contact électrique de sorte que les parois (140) et la feuille (110) constituent un circuit électrique fermé. À titre d'exemple, les parois (140) sont constituées de cuivre. Avantageusement, lesdites parois (140) comprennent au niveau de leur jonction avec la feuille (110) des extensions (145) s'étendant dans le plan (111) de formage.

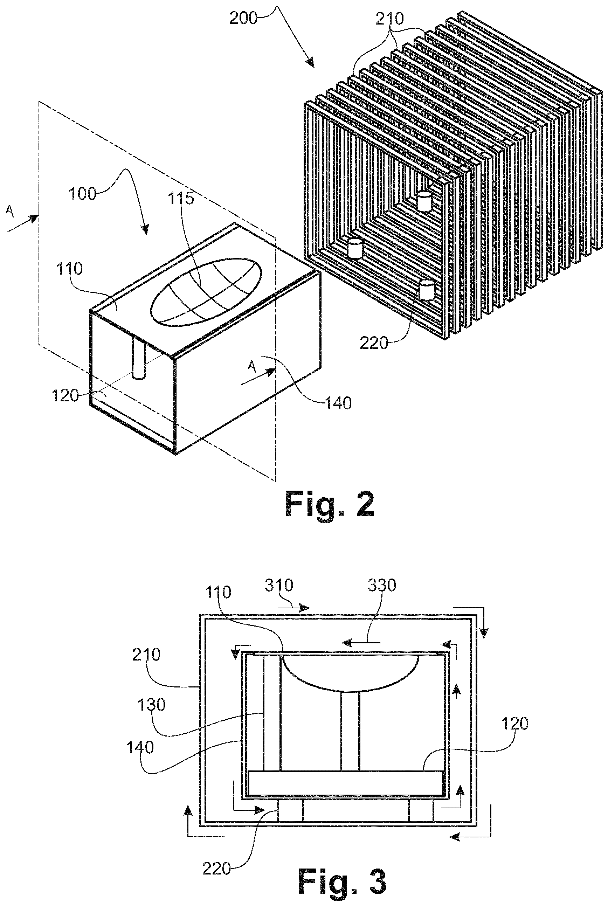

Figure 2, selon une première variante du dispositif objet de l'invention, l'outillage (100) coopère avec une enceinte (200) constituée par les spires (210) d'un circuit d'induction. Ledit outillage (100) est placé dans ladite enceinte (200) sur des moyens de positionnement (220) par exemple des plots isolants, permettant de positionner l'outillage au centre de ladite enceinte (200). Le circuit d'induction est connecté à un générateur (non représenté) apte à générer et à faire circuler dans lesdites spires (210) un courant électrique alternatif dont la fréquence est comprise entre 10 kHz et 100 kHz.

Ainsi, figure 3, lorsque le courant (310) électrique circule dans les spires (210) du circuit d'induction, des courants de Foucault (330) sont induits et circulent dans les parois (140) de l'outillage et dans la feuille (110) comportant la surface (115) moulante. Lesdits courants circulent dans une faible épaisseur, de quelques 1/10ème de millimètre à quelques millimètres dans une couche sur les faces extérieures de l'outillage qui sont en vis-à-vis des spires (210). Dans les parois (140) qui sont constituées d'un matériau électriquement conducteur de faible résistivité électrique, cette circulation de courants (330) induits produit un échauffement négligeable et consomme peu d'énergie. En revanche, dans la feuille (110) qui est constituée d'un matériau électriquement conducteur et magnétique, la circulation de ces courants à haute fréquence provoque un échauffement par induction. Ainsi, la majeur partie de l'énergie de chauffage se concentre sur la surface moulante.

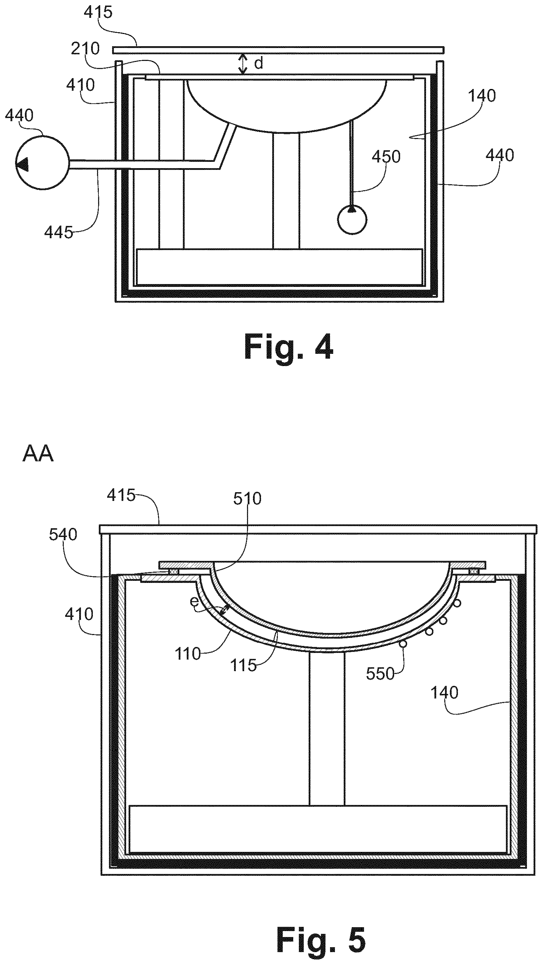

Figure 4 selon un autre exemple de réalisation du dispositif objet de l'invention, les spires (410) sont fixées sur les parois (140) de l'outillage hormis une partie (415) amovible desdites spires, sensiblement parallèle au plan de formage. Une couche (440) de matière électriquement isolante est interposée entre les parois et les conducteurs constituant les spires (410) du circuit d'induction, alternativement les spires elles-mêmes font l'objet d'un revêtement isolant. Ainsi, un outillage à chauffage autonome est créé.

En retirant la partie (415) amovible des spires (410), l'accès à la surface moulante de la feuille (110) est découvert, ce qui permet d'y installer une préforme fibreuse et tous les dispositifs d'ensachage de ladite préforme sur la forme moulante selon des techniques connues de l'art antérieur. Ainsi, selon un exemple de réalisation, la cavité formée par la surface moulante est connectée via un conduit (445) approprié à une pompe à vide (440) permettant, après l'ensachage, de tirer la préforme au vide, et des moyens (450) pour injecter de la résine liquide dans la préforme et ainsi de mettre en oeuvre des procédés de type VARTM ou LRIVAP hors autoclave. Selon un exemple de mise en oeuvre, après la mise en place de la préforme fibreuse sur la surface moulante, l'ensemble est ensaché pour le rendre étanche. La partie amovible (415) des spires est installée de sorte à fermer lesdites spires. La préforme est tirée au vide. Le circuit d'induction est alimenté en courant alternatif, ce qui a pour effet de chauffer la préforme fibreuse. La résine est alors injectée ou infusée dans la préforme fibreuse et le chauffage est maintenu le temps nécessaire pour obtenir la cuisson de ladite résine. L'alimentation électrique des moyens d'induction est modulée de sorte à modifier la température de chauffage entre l'injection et la cuisson.

Selon un mode de réalisation particulier, le dispositif de connexion entre la partie amovible (415) des spires (410) et lesdites spires, comporte des moyens pour régler la distance (d) entre ladite partie amovible et la feuille (210) portant la surface moulante.

Figure 5 selon un autre exemple de réalisation, le dispositif objet de l'invention utilise une contre-pièce (510) de profil complémentaire à la surface (115) moulante et isolée électriquement de la feuille (110) conductrice, par exemple au moyen de cales (540) isolantes. Ladite contre-pièce (510) est avantageusement constituée d'un matériau électriquement conducteur mais non magnétique tel qu'un alliage d'aluminium. Ainsi, la cavité délimitée entre la contre-pièce (510) et la surface moulante, cavité dans laquelle se trouve la préforme fibreuse et les moyens d'ensachage, est caractérisée par un entrefer (e) séparant la surface moulante (115) et la contre-pièce (510), ledit entrefer étant constant ou variable le long de ladite cavité selon le mode de réalisation. Lorsque les spires (410) du circuit d'induction sont alimentées par un courant alternatif à haute fréquence, des courants de Foucault circulent sur les surfaces délimitant la cavité, c'est-à-dire sur la surface moulante (115) et sur la surface en vis-à-vis de la contre-pièce (510). Cet effet technique est avantageusement utilisé selon différentes configurations. Ainsi, si la contre-pièce (510) est constituée d'un matériau électriquement conducteur et magnétique, cette circulation de courants induits provoque l'échauffement de la surface de la contre-pièce (510) de qui permet de chauffer la préforme sur ses deux faces. Si la contre-pièce (510) est constituée d'un matériau électriquement conducteur et non magnétique, ladite contre-pièce subit peu d'échauffement mais la distance de l'entrefer permet de modifier la quantité de courants induits sur la surface moulante. Ainsi, ladite contre-pièce (510) permet à la fois d'accroître l'efficacité énergétique du chauffage mais aussi de contrôler la distribution de courants induits dans la surface moulante et ainsi la répartition de température. La forme adaptée de la contre-pièce (510) en regard de la forme de la surface moulante est déterminée par simulation numérique ou par approche expérimentale successive. Selon un mode de réalisation particulier, la contre-pièce (510) est utilisée comme une tôle de conformation. Ce mode de réalisation est particulièrement avantageux lorsque le dispositif objet de l'invention est utilisé pour la consolidation de plis pré-imprégnés d'un polymère thermoplastique. Selon cette exemple, les cales (540) agissent comme des cales de tablage calibrant l'épaisseur minimale de l'épaisseur et évitant les phénomènes d'essorage de résine entre les plis. Avantageusement, un circuit (550) de refroidissement est fixé à la face opposée à la face moulante de la feuille (110) métallique. Selon cet exemple de réalisation, ledit circuit de refroidissement est réalisé par des conduits transportant un fluide caloporteur, tel que de l'air, de l'azote ou de l'eau, lesquels conduits sont soudés à la feuille. Alternativement, si la feuille est obtenue par un procédé d'usinage additif, lesdits conduits (550) sont obtenus de matière avec la feuille (110) au cours de cette opération d'usinage.

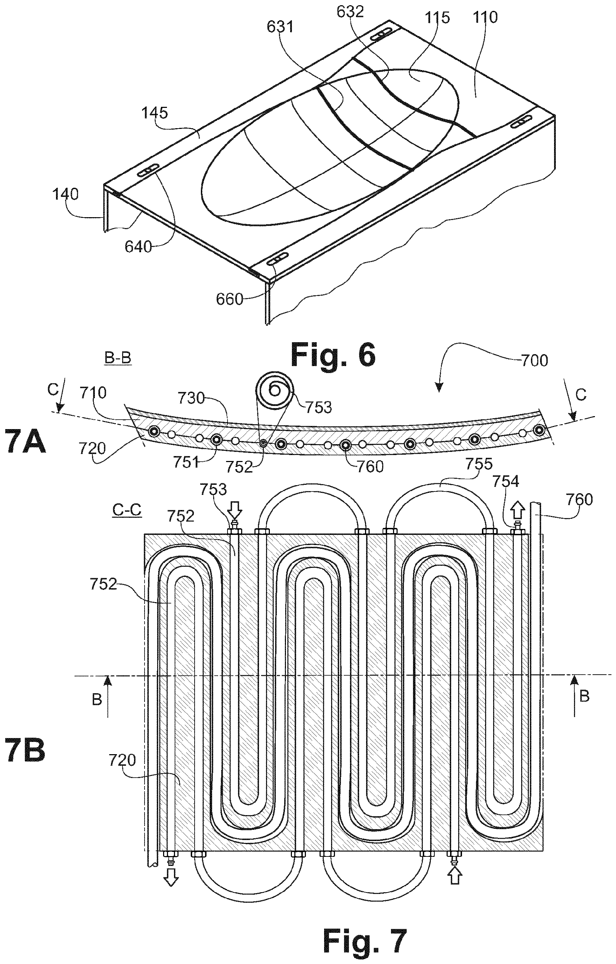

Figure 6, selon un exemple de réalisation, le contour (640) des extensions (145) des parois (140) de l'outillage dans le plan de formage est configuré de sorte à contrôler la longueur du trajet (631, 632) des courants induits entre les parois. Ainsi, selon un exemple de réalisation, ledit contour est configuré de sorte que la longueur électriquement résistive de ce trajet soit constante sur toute la surface de la face (115) moulante. D'autres formes de contour (640) permettent d'autres contrôles, et ainsi, à partir d'un contour (640) bidimensionnel de contrôler un trajet (631, 632) tridimensionnel.

Selon un exemple de réalisation avantageux, la feuille (110) portant la face (115) moulante est assemblée de manière amovible aux parois (140) par des moyens (660) appropriés. Ladite feuille (110) étant supportée par des moyens de support sur le socle rigide, cet assemblage avec les parois (140) a pour objet essentiel d'assurer la continuité électrique entre ladite feuille (110) et lesdites parois (140). Ainsi, l'assemblage est avantageusement réalisé pour supporter la dilatation différentielle entre la feuille (110) et les parois (140), par exemple lorsque ladite feuille est constituée d'INVAR et que les parois (140) sont constituées de cuivre, sans que cette dilatation différentielle n'introduise de contraintes ou de distorsion dans l'outillage. Ainsi, une base unique d'outillage, comportant des moyens de chauffage autonomes, est utilisable pour une variété de formes.

Figure 7A, selon un autre mode de réalisation du dispositif objet de l'invention, compatible avec les modes de réalisation précédents, la feuille (700) portant la face moulante, comporte une âme (710) de nature ferromagnétique, comportant la face moulante, et, plaquée sur la face opposée de ladite âme (710), une couche (720) de placage, constituée d'un matériau dont le comportement magnétique est différent de celui du matériau constituant l'âme (710) ferromagnétique. Ainsi, à titre d'exemple non limitatif, l'âme (710) est réalisée en nickel et le placage (720) est constitué de cuivre. Des conduits (751, 752), s'étendant sur la longueur de la face moulante et, en section, entre l'âme (710) ferromagnétique et le placage (720), sont utilisés, selon cet exemple de réalisation pour y insérer un circuit d'induction, et pour la circulation d'un fluide caloporteur. Selon cet exemple de réalisation les conduits (752) destinés au transport du fluide caloporteur s'étendent parallèlement aux conduits (751) comprenant le circuit d'induction. Selon un mode de réalisation alternatif (non représenté) les deux types de conduit s'étendent selon des directions sécantes. Selon ce dernier mode de réalisation les deux types de conduits s'étendent dans des altitudes différentes selon la section de la feuille (700). Plus particulièrement lorsque le fluide caloporteur est gazeux, tout ou partie des conduits (752) destinés à véhiculer ledit fluide comprennent des moyens pour favoriser un écoulement turbulent dans fluide dans lesdits conduits. À titre d'exemple, lesdits moyens sont constitué par un turbulateur (753) sous la forme d'une tige torsadée placé au centre du conduit et s'étendant sur toute ou partie de la longueur dudit conduit.

Figure 7B, le circuit d'induction comprend un ou plusieurs inducteurs (760). Ledit inducteur est préférentiellement constitué d'un câble conducteur multibrins, non isolés individuellement, ce qui lui confère une souplesse suffisante pour suivre le contour desdits conduits selon la forme complexe de la face moulante. Selon cet exemple de réalisation, les conduits (752) de refroidissement sont réalisés directement lors de la fabrication de la feuille (700), par exemple selon un procédé d'usinage additif. Toujours selon cet exemple de réalisation, le dispositif objet de l'invention comporte deux circuits de refroidissement comprenant chacun une arrivée (753) et une sortie (754) du fluide caloporteur. Le raccordement entre les conduits (752) de refroidissement est réalisé par des flexibles (755) à l'extérieur de la feuille (700) métallique.

Figure 7A, selon cet exemple de réalisation, l'âme (710) ferromagnétique est recouverte d'une couche (730) d'un revêtement de conductivité, et avantageusement, d'effusivité thermique élevées. Ainsi, ce revêtement permet de favoriser l'uniformisation de la température sur la face moulante lors du chauffage, et favorise les échanges thermiques avec la préforme mise en oeuvre dans le dispositif objet de l'invention. Selon différents exemples de réalisation ledit revêtement (730) est constitué de cuivre ou d'un alliage cuivreux, l'aluminium ou d'un alliage d'aluminium ou encore de graphite.

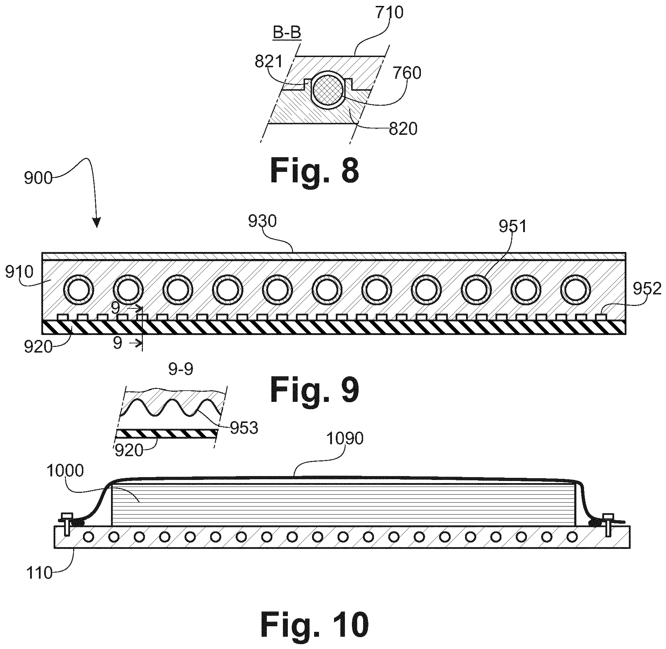

Figure 8, selon une variante du mode de réalisation représenté figure 7, le placage (820) est réalisé dans un matériau ferrimagnétique et comporte des reliefs (821) en protrusion s'étendant dans l'âme (710) ferromagnétique, au droit des conduits comportant un inducteur (760). Ledit placage est par exemple constitué d'un ferrite déposé par exemple, par frittage laser ou par projection par plasma au dos de ladite âme (710) ferromagnétique. Alternativement ledit placage (820) est obtenu par une technique d'émaillage, la couche d'émail comprenant des particules de ferrite adaptées, ou part dépôt d'un composite comprenant de telles particules.

Un ferrite est un oxyde de type FexOyAzBn où A et B sont des métaux, par exemple Ni, Mn, Zn. La nature du ferrite et la hauteur des reliefs (821) sont déterminés en fonction de la fréquence du courant d'alimentation de l'inducteur (760) de sorte à concentrer la circulation des courants induits dans l'âme (710) ferromagnétique et à améliorer l'efficacité du chauffage à puissance électrique égale.

Figure 9, selon un autre exemple de réalisation du dispositif objet de l'invention, la feuille métallique (900) du dispositif objet de l'invention, comprend une âme (910) constituée d'un l'alliage léger de fonderie, laquelle âme est obtenue par coulée gravitaire dudit alliage dans un moule comprenant des tubes (951) en acier dans lesquels sont installés ultérieurement les inducteurs. À titre d'exemple non limitatif, ledit alliage léger est un alliage d'aluminium ou de magnésium. Selon une première variante de réalisation, lesdits tubes (951) ont constitués d'un acier ferromagnétique ou comportent un revêtement ferromagnétique. Ainsi lorsqu'un courant alternatif parcours les inducteurs, les tubes sont chauffés et transmettent leur chaleur par conduction à l'âme (910) en alliage léger laquelle chaleur se propage jusqu'à la surface moulante.

Bien que cet exemple de réalisation soit représenté dans le cas d'une surface moulante plane, l'homme du métier adaptera aisément ce mode de réalisation au cas où la surface moulante est quelconque, ce mode de réalisation étant cependant mieux adapté au cas d'une surface moulante en simple courbure ou en double courbure, dont l'une des courbure est peu prononcée.

Selon un exemple de réalisation, non limité à ce mode de mise en oeuvre, les canaux de refroidissement (952) sont obtenus par des rainurages de la face opposée à la surface moulante de l'âme de la feuille métallique. Afin de faciliter la réalisation de l'étanchéité, le refroidissement est réalisé par un fluide caloporteur gazeux, par exemple de l'air. Ainsi, contrairement au cas d'un refroidissement par fluide caloporteur liquide, une légère fuite dudit fluide caloporteur n'a pas d'incidence sur la sécurité de fonctionnement du dispositif. Selon cet exemple de réalisation, les rainures sont fermées par une couche (920) souple, par exemple constituée de silicone fluoré pour résister la température. Ladite couche souple (920) est ici représentée comme s'étendant sur toute la surface de la feuille métallique. Selon des modes de réalisation alternatifs, l'étanchéité des canaux (952) est réalisée par une couche souple discontinue (non représentée), chaque segment de ladite couche s'étendant en largeur selon un pour plusieurs canaux.

Selon cet exemple de réalisation, détail 9-9, une des faces des rainures créant les canaux comporte un profil (953) apte à favoriser un écoulement turbulent du fluide dans lesdits canaux de sorte à favoriser les échanges par convection entre le fluide caloporteur et la feuille métallique.

Figure 10, selon un exemple de réalisation plus particulièrement adapté à la cuisson/consolidation d'une préforme (1000) fibreuse de forte épaisseur, le dispositif objet de l'invention met en oeuvre des moyens d'ensachage comprenant une vessie (1090) chauffante. Selon un exemple de réalisation une telle vessie chauffante est constituée de silicone est d'un maillage de fils métallique fins aptes à produire un chauffage par résistance électrique. Ce chauffage supplémentaire permet d'uniformiser la température dans l'épaisseur de la préforme (1000).

La description ci-avant et les exemples de réalisation montrent que l'invention atteint les objectifs visés, en particulier, elle permet la mise en oeuvre de procédés de transformation tels que la cuisson et consolidation de pièces composites de grande dimension sans recours à un autoclave ou une étuve et en économisant l'énergie. Le dispositif objet de l'invention permet, comparativement aux dispositifs de l'art antérieur, d'utiliser des moyens légers adaptables à différentes configurations.

## Revendications

1. Dispositif pour le chauffage d'une face moulante, notamment de grande dimension, comportant :
a. une feuille (110, 700, 900) métallique comprenant une couche (110, 710, 910) ferromagnétique et comprenant une partie (115) formée selon une forme définissant ladite face moulante et un plan (111) de formage ;
b. un socle (120) et des moyens (130) de support de ladite feuille (110, 700, 900) métallique sur ledit socle ;
c. des moyens (210, 410, 415, 760) de chauffage par induction de ladite feuille (110, 700, 900) métallique ;
**caractérisé en ce que** la feuille (700, 900) métallique comporte un conduit (751, 752, 951, 952) apte à recevoir un moyen de chauffage électrique ou à canaliser la circulation d'un fluide caloporteur.

2. Dispositif selon la revendication 1, dans lequel la feuille (110, 700) métallique comprend une couche (110, 710) ferromagnétique constituée d'un alliage comprenant du Fer (Fe) et du Nickel (Ni) de type INVAR®.

3. Dispositif selon la revendication 1, dans lequel la feuille (110, 700) métallique comprend une couche (110,710) ferromagnétique constituée de Nickel (Ni).

4. Dispositif selon la revendication 1, comportant :
d des moyens d'ensachage délimitant, avec la face moulante, une cavité étanche apte à contenir une préforme fibreuse ;
e. des moyens (440, 445) pour tirer au vide le volume compris entre la face moulant et les moyens d'ensachage.

5. Dispositif selon la revendication 4, comportant :
f. des moyens (450) pour injecter de la résine dans la cavité délimitée par la face moulante.

6. Dispositif selon la revendication 4, dans lequel la face moulante de la feuille (110) métallique est ferromagnétique et qui comprend :
h. une enceinte (200) dont le volume est délimité par les spires (210, 410) d'un circuit d'induction ;
i. des moyens (220) pour charger, décharger et maintenir la feuille métallique et sont support à l'intérieur des spires (210, 410) du circuit d'induction.

7. Dispositif selon la revendication 6, dans lequel l'ensachage est constitué d'un matériau électriquement isolant et comprenant:
j. une cale (540) électriquement isolante sur le pourtour de la feuille métallique ;
k. une contrepièce (510) constituée d'un matériau électriquement conducteur et apte à pressurer une préforme dans la cavité comprise entre l'ensachage et la surface moulante, lors du tirage au vide de ladite cavité et comprenant une surface en vis-à-vis de la face moulante de sorte à créer un entrefer (e) entre ladite face (115) moulante et la face en vis-à-vis de la contrepièce (510)

8. Dispositif selon la revendication 6, dans lequel la feuille (110, 910) métallique est constituée d'un matériau électriquement conducteur non magnétique et la surface (115) moulante comprend un revêtement ferromagnétique.

9. Dispositif selon la revendication 1, dans lequel le moyen de chauffage électrique est un inducteur (760) et la feuille (700) métallique comprend une âme (710) constituée d'un matériau magnétique.

10. Dispositif selon la revendication 9, dans lequel l'âme (710) magnétique de la feuille métallique, comprend sur sa face opposée à la face moulante, un placage (720, 820) constitué d'un matériau dont les propriétés magnétiques sont différentes de celles de ladite âme magnétique, les conduits (751, 752) s'étendant selon des directions essentiellement parallèles à la face moulante entre ladite couche (710) magnétique et le placage (720, 820).

11. Dispositif selon la revendication 10, dans lequel le placage (720) est constitué d'un matériau électriquement conducteur amagnétique.

12. Dispositif selon la revendication 10, dans lequel le placage (820) est constitué d'un matériau ferrimagnétique ou ferromagnétique.

13. Dispositif selon la revendication 12, dans lequel le placage (820) comprend des reliefs (821) proéminents s'étendant dans la couche (710) magnétique à l'emplacement des conduits (751) comprenant un inducteur (760).

14. Dispositif selon la revendication 9, dans lequel la feuille métallique (700) comporte un revêtement (730) thermiquement conducteur, lequel revêtement constitue la face moulante.

15. Dispositif selon la revendication 8, dans lequel le moyen de chauffage est un inducteur et dans lequel l'âme (910) de la feuille (900) métallique est constituée d'un alliage léger et dans lequel les conduits (951) véhiculant ledit inducteur sont constitués d'un matériau magnétique tel un acier.

16. Dispositif selon la revendication 1, comprenant sur la face opposée à la face moulante un placage (920) constitué d'un matériau souple apte à fermer une des faces d'un conduit (952) de circulation d'un fluide caloporteur.

17. Dispositif selon la revendication 1, dans lequel le conduit (752, 952) adapté à la circulation d'un fluide caloporteur comporte des moyens (753, 953) aptes à favoriser un régime d'écoulement turbulent dudit fluide caloporteur.

## Patentansprüche

1. Vorrichtung zum Erwärmen einer Formfläche, insbesondere von großer Abmessung, mit:
a. ein Metallblech (110, 700, 900) mit einer ferromagnetischen Schicht (110, 710, 910) und mit einem Abschnitt (115), der gemäß einer Form ausgebildet ist, die die Formfläche definiert, und einen Formungsplan (111);
b. eine Basis (120) und eine Stützeinrichtung (130) des vorgenannten Metallblechs (110, 700, 900) auf der vorgenannten Basis;
c. Mittel (210, 410, 415, 760) für die Induktionserwärmung des Bleches (110, 700, 900);
**dadurch gekennzeichnet, daß** das Blech (700, 900) eine Rohr (751, 752, 951, 952) aufweist, die zur Aufnahme einer elektrischen Heizeinrichtung ausgebildet ist oder die Umwälzung eines Kühlmittels leitet.

2. Vorrichtung nach Anspruch 1, **dadurch gekennzeichnet, dass** das Metallblech (110, 700) eine ferromagnetische Schicht (110, 710) umfasst, die aus einer Legierung aus Eisen (Fe) und Nickel (Ni) vom Typ INVAR® besteht.

3. Vorrichtung nach Anspruch 1, **dadurch gekennzeichnet, dass** das Metallblech (110, 700) eine aus Nickel (Ni) bestehende ferromagnetische Schicht (110, 710) umfasst.

4. Vorrichtung nach Anspruch 1, **dadurch gekennzeichnet**,
d. Abfüllmittel, die mit der Formfläche einen abgedichteten Hohlraum begrenzen, der angepasst ist, um eine faserförmige Vorform zu enthalten;
e. Mittel (440, 445) zum Vakuumpumpen des zwischen der Formfläche und dem Sackmittel eingeschlossenen Volumens.

5. Vorrichtung nach Anspruch 4, **dadurch gekennzeichnet**,
f. Mittel (450) zum Einspritzen eines Harzes in den von der Formfläche begrenzten Hohlraum.

6. Vorrichtung nach Anspruch 4, wobei die Formfläche des Metallblechs (110) ferromagnetisch ist und dass es umfasst:
h. eine Umhüllung (200), deren Volumen durch die Spulen (210, 410) eines Induktionskreises begrenzt ist;
i. Mittel (220) zum Beladen, Entladen und Halten des Bleches und seiner Stützmittel Innerhalb der Spulen (210, 410) des Induktionskreises.

7. Vorrichtung nach Anspruch 6, bei der die Sackeinrichtung aus einem elektrisch isolierenden Material besteht und umfasst:
j. eine elektrisch isolierende Unterlage (540) um den Rand des Bleches;
k. ein Gegenstück (510) aus einem Material, das elektrisch leitfähig ist und in der Lage ist, einen Vorformling in dem Hohlraum zwischen dem Sackmittel und der Formfläche während des Vakuumpumpen des Hohlraums zu unterdrücken und eine der Formfläche zugewandte Oberfläche aufzunehmen, Um einen Spalt (e) zwischen der Formfläche (115) und der ihm zugewandten Oberfläche des Gegenstückes (510) zu erzeugen.

8. Vorrichtung nach Anspruch 6, **dadurch gekennzeichnet, dass** das Blech (110, 910) aus einem nichtmagnetischen, elektrisch leitfähigen Material besteht und die Formfläche (115) eine ferromagnetische Beschichtung aufweist.

9. Vorrichtung nach Anspruch 1, **dadurch gekennzeichnet, dass** die Einrichtung zur elektrischen Erwärmung eine Induktor (760) ist und das Blech (700) ein Kernblech (710) aus magnetischem Material aufweist.

10. Vorrichtung nach einem der Ansprüche 9, **dadurch gekennzeichnet, dass** das magnetische Kernblech (710) des Bleches auf seiner der Formfläche gegenüberliegenden Fläche eine Beschichtung (720, 820) aufweist, die aus einem Material besteht, dessen magnetische Eigenschaften sich von denen unterscheiden Wobei die Rohren (751, 752) sich entsprechend den Richtungen erstrecken, die im wesentlichen parallel zu der Formfläche zwischen dem Magnetkernblech (710) und dem Plattieren (720, 820) sind.

11. Vorrichtung nach Anspruch 10, **dadurch gekennzeichnet, dass** die Beschichtung (720) aus einem nichtmagnetischen, elektrisch leitfähigen Material besteht.

12. Vorrichtung nach Anspruch 10, **dadurch gekennzeichnet, dass** die Beschichtung (820) aus einem ferrimagnetischen oder ferromagnetischen Material besteht.

13. Vorrichtung nach Anspuch 12, **dadurch gekennzeichnet, dass** die Beschichtung (820) an der Stelle der Rohren (751), die einen Induktor (760) aufnehmen, in die Magnetschicht (710) hineinragende Reliefs (821) aufweist.

14. Vorrichtung nach Anspruch 9, **dadurch gekennzeichnet, dass** das Blech (700) eine wärmeleitfähige Beschichtung (730) aufweist, wobei die Beschichtung die Formfläche bildet.

15. Vorrichtung nach Anspruch 8, **dadurch gekennzeichnet, dass** die Heizeinrichtung eine Induktivität ist und bei der das Kernblech (900) (910) des Bleches aus einer Leichtmetalllegierung besteht, in der Rohren (951), die den Induktor transportieren, hergestellt sind Eines magnetischen Materials wie Stahl.

16. Vorrichtung nach Anspruch 1, **dadurch gekennzeichnet, dass** sie auf der der Formfläche gegenüberliegenden Fläche eine aus einem flexiblen Material bestehende Beschichtung (920) aufweist, die geeignet ist, eine der Flächen einer Rohr (952) zu schließen, die zum Abführen eines Kühlmittels verwendet wird.

17. Vorrichtung nach Anspruch 1, **dadurch gekennzeichnet, dass** die zum Abführen eines Kühlmittels ausgebildete Rohr (752, 952) Mittel (753, 953) zur Förderung einer turbulenten Strömung des Kühlmittels aufweist.

## Claims

1. Device for heating of a molding face, particularly of large dimension, comprising:
a. a metal sheet (110, 700, 900) including a ferromagnetic layer (110, 710, 910) and including a portion (115) formed according to a shape defining said molding face and a forming plan (111);
b. a base (120) and supporting means (130) of the aforesaid metal sheet (110, 700, 900) on the aforementioned base;
c. means (210, 410, 415, 760) for the induction heating of the metal sheet (110, 700, 900);
**characterized in that** the metal sheet (700, 900) comprises a conduit (751, 752, 951, 952) adapted to receive an electric heating means or to duct the circulation of a coolant.

2. The device according to claim 1, wherein the metal sheet (110, 700) comprises a ferromagnetic layer (110, 710) consisting of an alloy comprising Iron (Fe) and Nickel (Ni) of the INVAR^{®} type.

3. The device according to claim 1, wherein the metal sheet (110, 700) comprises a ferromagnetic layer (110, 710) consisting of Nickel (Ni).

4. The device according to claim 1, comprising:
d bagging means delimiting with the molding face a sealed cavity adapted to contain a fibrous preform;
e. means (440, 445) for vacuum pumping the volume enclosed between the molding face and the bagging means.

5. The device according to claim 4, comprising:
f. means (450) for injecting a resin into the cavity bounded by the molding face.

6. The device according to claim 4, wherein the molding face of the metal sheet (110) is ferromagnetic and that it comprises:
h. an enclosure (200) whose volume is bounded by the coils (210, 410) of an induction circuit;
i. means (220) for loading, unloading and keep the metal sheet and its supporting means inside the coils (210, 410) of the induction circuit.

7. The device according to claim 6, in which the bagging means is made of an electrically insulating material and comprises:
j. an electrically insulating shim (540) around the edge of the metal sheet;
k. a counterpiece (510) made of a material that is electrically conductive and able to pressure a preform in the cavity, between the bagging means and the molding face, during the vaccum pumping of the cavity, and including a surface facing towards the molding face, in order to create a gap (e) between said molding face (115) and the surface of the counterpiece (510) facing it.

8. The device according to claim 6, wherein the metal sheet (110, 910) is made of a non-magnetic electrically conductive material and molding face (115) includes a ferromagnetic coating.

9. The device according to claim 1, wherein the means for electric heating is an inductor (760) and the metal sheet (700) includes a core sheet (710) made of a magnetic material.

10. The device according to claim 9, wherein themagnetic core-sheet (710) of the metal sheet, includes on its face opposite the molding face, a plating (720, 820) consisting of a material whose magnetic properties are different from those of the said magnetic core sheet, the conduits (751, 752) extending according to directions essentially parallel to the molding face between said magnetic core-sheet (710) and the plating (720 820).

11. The device according to claim 10, wherein the plating (720) is made of a non-magnetic electrically conductive material.

12. The device according to claim 10, wherein the plating (820) is made of a ferrimagnetic or a ferromagnetic material.

13. The device according to claim 12 wherein the plating (820) includes prominent reliefs (821) extending into the magnetic layer (710) at the location of the conduits (751) housing an inductor (760).

14. The device according to claim 9, wherein the metal sheet (700) comprises a thermally conductive coating (730), said coating constituting the molding face.

15. The device according to claim 8, wherein the heating means is an inductor and in which the core-sheet (900) (910) of the metal sheet is made of a light alloy in which conduits (951) conveying the inductor are made of a magnetic material such as steel.

16. The device according to claim 1, comprising on the face opposite the molding face a plating (920) made of a flexible material adapted to close one of the faces of a conduit (952) used for ducting a coolant.

17. The device according to claim 1, wherein the conduit (752, 952) adapted for ducting a coolant comprises means (753, 953) for promoting a turbulent flow of said coolant.
